# EUROPÄISCHE PATENTANMELDUNG

(11) **EP 2 275 465 A2**
(43) Veröffentlichungstag der Anmeldung: **19.01.2011**
(21) Anmeldenummer: 10168975.0
(22) Anmeldetag: 09.07.2010
(51) Int. Cl.: C08G 18/00, A43B 13/04

(54) **Haltbare, weiche Einleger für Schuhsohlen**

(30) Priorität: 13.07.2009 EP 09165313
(71) Anmelder: BASF SE, 67056 Ludwigshafen (DE)
(72) Erfinder: Ortalda, Marco, 10137, Torino (IT); Celli, Gianluca, 10139, Torino (IT)

(57) **Zusammenfassung**

Die vorliegende Erfindung betrifft ein Verfahren zur Herstellung von weichen Schuhsohleneinlegeteilen mit einer Shore-A-Härte von maximal 40 und einer Dichte von 100 bis 500 g/L, bei dem man a) organische Polyisocyanate mit b) höhermolekularen Verbindungen mit mindestens zwei reaktiven Wasserstoffatomen, enthaltend mindestens 50 Gew.-% Polytetrahydrofuran mit einem Molekulargewicht von 500 bis 6000 g/mol, c) Treibmitteln und gegebenenfalls d) Kettenverlängerungsmitteln, e) Katalysatoren und f) sonstigen Hilfsmitteln und/oder Zusatzstoffen zu einer Reaktionsmischung vermischt, in eine Form gibt und zu einem Polyurethanintegralschaumstoff ausreagieren lässt. Weiter betrifft die vorliegende Erfindung Schuhsohleneinlageteile, herstellbar nach einem solchen Verfahren und Schuhsohlen, enthaltend solche Schuhsohleneinlegeteile.

## Beschreibung

Die vorliegende Erfindung betrifft ein Verfahren zur Herstellung von weichen Schuhsohleneinlegeteilen mit einer Shore-A-Härte von maximal 40 und einer Dichte von 100 bis 500 g/L, bei dem man a) organische Polyisocyanate mit b) höhermolekularen Verbindungen mit mindestens zwei reaktiven Wasserstoffatomen, enthaltend mindestens 50 Gew.-% Polytetrahydrofuran mit einem Molekulargewicht von 500 bis 6000 g/mol, c) Treibmitteln und gegebenenfalls d) Kettenverlängerungsmitteln, e) Katalysatoren und f) sonstigen Hilfsmitteln und/oder Zusatzstoffen zu einer Reaktionsmischung vermischt, in eine Form gibt und zu einem Polyurethanintegralschaumstoff ausreagieren lässt. Weiter betrifft die vorliegende Erfindung Schuhsohleneinlageteile, herstellbar nach einem solchen Verfahren und Schuhsohlen, enthaltend solche Schuhsohleneinlegeteile.

Schuhsohlen auf Basis von Polyurethan sind bekannt und vielfältig beschrieben. Neben traditionellen Schuhsohlen, die dem Fuß möglichst viel Halt bieten, hat sich in den letzten Jahren aber auch ein Konzept des natürlichen Gehens entwickelt, bei dem der Träger eines speziellen Schuhs das Gefühl hat, auf einem weichen Boden, beispielsweise Sand oder weichem Waldboden, zu gehen. Dieses Gefühl wird erreicht durch weiche Schuhsohleneinlegeteile, die zumindest Teile der Zwischensohle ausbilden. Solche Schuhsohlen sind beispielsweise in WO 9903368 und WO 200115560 beschrieben. Neben dem angenehmen Gefühl beim Gehen konnte in Studien auch gezeigt werden, dass die Stoßbelastung auf den Körper deutlich reduziert wird und durch vermehrte Ausgleichs- und Haltearbeit des Fußes der Muskel- und Bänderapparat gestärkt wird. So kann auch Haltungsschäden und übermäßigen Belastungen der Gelenke und der Wirbelsäule entgegengewirkt werden und weit verbreiteten gesundheitlichen Leiden, wie Rücken-, Gelenk-, Venen-, Bein- und Fußprobleme können bekämpft werden.

Damit der beschriebene Effekt erzielt wird, müssen die weichen Schuhsohleneinlegeteile eine geringe Härte und ein für eine Schuhsohle relativ großes Volumen aufweisen. Weiter müssen sie stark kompressibel sein.

Üblicherweise werden für die Stoßdämpfung im Schuhsohlenbereich Gele eingesetzt. Als großvolumige Einlegeteile für Anwendungen gemäß WO 9903368 und WO 200115560 sind diese aber ungeeignet, da diese zu wenig kompressibel sind und eine zu hohe Dichte aufweisen und damit zu schwer würden. So legt WO 9903368 nahe, einen offenzelligen Schaumstoff einzusetzen. Ein solcher offenzelliger Schaumstoff hat aber den Nachteil, dass er bei normalem Gebrauch sehr schnell verschmutzt und durch Umwelteinflüsse zerstört werden kann.

Neben einem offenzelligen Schaumstoff können auch üblicherweise für Schuhsohlen eingesetzte Polyurethanintegralschaumstoffe leicht modifiziert als Schuhsohleneinleger eingesetzt werden. Leider hat sich aber herausgestellt, dass im diese Schuhsohleneinlegeteile im täglichen Gebrauch durch die mechanische Belastung, insbesondere durch die wiederholte hohe Kompression oder durch Abrieb sowie Hydrolyseeinflüsse zu einer raschen Zerstörung der Schuhsohleneinlegeteile führen.

Aufgabe der vorliegenden Erfindung war es, einen Schuhsohleneinlegeteil zu liefern, der die oben genannten Nachteile nicht aufweist, mechanisch stabil ist, eine hohe Kompressibilität aufweist und hydrolysestabil ist.

Diese Aufgabe wurde überraschenderweise gelöst durch ein weiches Schuhsohleneinlegeteil mit einer Shore-A-Härte von maximal 40 und einer Dichte von 100 bis 500 g/L, herstellbar durch ein Verfahren, bei dem man a) organische Polyisocyanate mit b) höhermolekularen Verbindungen mit mindestens zwei reaktiven Wasserstoffatomen, enthaltend mindestens 50 Gew.-% Polytetrahydrofuran mit einem Molekulargewicht von 500 bis 6000 g/mol, c) Treibmitteln und gegebenenfalls d) Kettenverlängerungsmitteln, e) Katalysatoren und f) sonstigen Hilfsmitteln und/oder Zusatzstoffen zu einer Reaktionsmischung vermischt, in eine Form gibt und zu einem Polyurethanintegralschaumstoff ausreagieren lässt.

Erfindungsgemäße Schuhsohleneinlegeteile zeigen sehr gute Haltbarkeiten und einen geringen Abrieb von vorzugsweise weniger als 200 mg, besonders bevorzugt weniger als 150 mg und insbesondere von weniger als 100 mg bei 5 N und 40 m nach DIN 53516, ausgezeichnete mechanische Eigenschaften, wie eine Shore A-Härte nach DIN 53505 von kleiner 40 vorzugsweise kleiner 30, eine Asker C-Härte nach SRIS 0101 von vorzugsweise kleiner 60, besonders bevorzugt kleiner 50, Zugfestigkeiten von vorzugsweise größer 1,5, besonders bevorzugt größer 2,0 N/mm² nach DIN 53504, eine Reißdehnung von vorzugsweise mehr als 200 %, besonders bevorzugt mehr als 300% nach DIN 53504, eine Weiterreißfestigkeit von vorzugsweise größer 1,5, besonders bevorzugt 2,0 N/mm nach DIN 53507, eine Rückprallelastizität von vorzugsweise größer 30%, besonders bevorzugt größer 40 % und kleiner 70% nach DIN 53512 sowie einen Druckverformungsrest bei 50 °C und einer Kompression von 50 % nach 6 Stunden von maximal 10%, besonders bevorzugt maximal 8%. Weiter sind erfindungsgemäße Schuhsohleneinlegeteile hydrolysestabil, das heißt bei einer Hydrolysealterung gemäß DIN 53543 von 35 Tagen bei 70 °C und 100 % relativer Luftfeuchtigkeit ändern sich die Werte für die genannten mechanischen Eigenschaften um vorzugsweise maximal 30%, besonders bevorzugt maximal 20%. Die Dichte der erfindungsgemäßen Schuhsohleneinlegeteile liegt bei 100 bis 500 g/L, vorzugsweise 150 bis 300 g/L. Damit sind die erfindungsgemäßen Schuhsohleneinlegeteile ausgezeichnet geeignet für den Einsatz in Schuhsohlen, vorzugsweise in der Zwischensohle und besonders bevorzugt in einer Schuhsohle, wie in WO 9903368 und WO 200115560 beschrieben. Erfindungsgemäße Schuhsohleneinlegeteile werden hergestellt indem man a) organische Polyisocyanate mit b) höhermolekularen Verbindungen mit mindestens zwei reaktiven Wasserstoffatomen, enthaltend mindestens 50 Gew.-% Polytetrahydrofuran mit einem Molekulargewicht von 500 bis 6000 g/mol, c) Treibmitteln und gegebenenfalls d) Kettenverlängerungsmitteln, e) Katalysatoren und f) sonstigen Hilfsmitteln und/oder Zusatzstoffen zu einer Reaktionsmischung vermischt, in eine Form gibt und zu einem Polyurethanintegralschaumstoff ausreagieren lässt.

Als Polyurethanintegralschaumstoffe im Sinn der Erfindung werden PolyurethanSchaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei vorzugsweise im Bereich von 100 bis 500 g/L, besonders bevorzugt von 150 bis 300 g/L.

Die zur Herstellung der erfindungsgemäßen Polyurethanintegralschaumstoffe verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 20 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten. Vorzugsweise wird kein Polymer-MDI eingesetzt.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und den unter (b) beschriebenen Polyolen, besonders bevorzugt Polytetrahydrofuran eingesetzt wird.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter c) beschrieben. Besonders bevorzugt werden keine Kettenverlängerer zur Herstellung der Prepolymere eingesetzt.

Höhermolekulare Verbindungen b) mit mindestens zwei gegen Isocyanatgruppen reaktiven Wasserstoffatomen können beispielsweise Polyetherole oder Polyesterole sein. Diese enthalten mindestens 50 Gew.-%, bevorzugt mindestens 75 Gew.-%, besonders bevorzugt mindestens 90 Gew.-% und insbesondere ausschließlich Polytetrahydrofuran mit einem Molekulargewicht von 500 bis 6000 g/mol, vorzugsweise 600 bis 4000 g/mol und besonders bevorzugt 1000 bis 3000 g/mol, bezogen auf das Gesamtgewicht der Komponenten (a-2) und (b).

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, Ethylenoxid, 1,2-Propylenoxid, 1,3-Propylenoxid, 1,2- bzw. 2,3-Butylenoxid und vorzugsweise Tetrahydrofuran. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt wird Tetrahydrofuran als alleiniges Alkylenoxyd eingesetzt.

Als Startermolekül kommen vorzugsweise Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht, vorzugsweise werden ausschließlich zweiwertige Alkohol oder Wasser, insbesondere Wasser eingesetzt.

Die Polyetherpolyole, die gegebenenfalls neben Polytetrahydrofuran eingesetzt werden, beispielsweise Polyoxypropylen-polyoxyethylen-polyole, besitzen vorzugsweise eine Funktionalität von 2 bis 3 und Molekulargewichte von 500 bis 8.000, vorzugsweise von 1.000 bis 6.000 g/mol.

Polytetrahydrofuran wird durch Polymerisation von Tetrahydrofuran erhalten. Dabei wird vorzugsweise ausschließlich Tetrahydrofuran als Monomeres eingesetzt.

Als Kettenverlängerungsmittel und/oder Vernetzungsmittel (c) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden keine Vernetzungsmittel eingesetzt. Ganz besonders bevorzugt werden als Kettenverlängerer (c) Monoethylenglycol, 1,4-Butandiol, Glycerin oder Mischungen davon und insbesondere Monoethylenglycol oder Mischungen, enthaltend Monoethylenglycol, eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (c), zum Einsatz.

Ferner sind bei der Herstellung von Polyurethanintegralschaumstoffen Treibmittel (d) zugegen. Diese Treibmittel d) können Wasser enthalten. Als Treibmittel (d) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, insbesondere 0,4 bis 1 Gew.-%, bezogen auf das Gesamtgewicht der Komponenten (a) bis (f). Besonders bevorzugt werden Treibmittel (d) in solchen Mengen eingesetzt, dass die freigeschäumte Dichte, die erhalten wird, wenn die Komponenten (a) bis (f) bei Normaldruck ohne räumliche Begrenzung miteinander umgesetzt werden, zwischen 80 und 300 g/L liegt.

Als Katalysatoren (e) zur Herstellung der Polyurethanschaumstoffe werden bevorzugt Verbindungen verwendet, welche die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Methylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Besonders bevorzugt enthält der Katalysator (e) 1-Methylimidazol.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Der Reaktionsmischung zur Herstellung der Polyurethanschäume können gegebenenfalls auch noch Hilfsmittel und/oder Zusatzstoffe (f) zugegeben werden. Genannt seien beispielsweise oberflächenaktive Substanzen, Schaumstabilisatoren, Zellregler, Trennmittel, Weichmacher, Gummivulkanistionshilfsmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 30 Gew.-%, vorzugsweise 1 bis 15 Gew.-%, bezogen auf das Gewicht der Komponenten (a) bis (c), zugegeben, wobei jedoch der Gehalt an Matten, Vliesen und Geweben aus natürlichen und synthetischen Fasern Werte bis 40 Gew.-% erreichen kann.

Als Weichmacher und Hydrolyseschutzmittel können beispielsweise γ-Butyrolycton, Phthalate oder organische Carbonate eingesetzt werden. Besonders bevorzugt wird Phthalat als Weichmacher eingesetzt.

Die Komponenten (a) bis (f) werden zur Herstellung eines erfindungsgemäßen Polyurethanintegralschaumstoffs in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäßen Polyurethanintegralschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7. Gegebenenfalls können die Formen bereits weitere Teile der Schuhsohle enthalten, wie beispielsweise die Außensohle oder Teile der Zwischensohle. Gegebenenfalls können in der Form auch Platzhalter, beispielsweise aus Metall, enthalten sein, die nach Aushärten der erfindungsgemäßen Schuhsohleneinlegeteile entnommen werden und Raum schaffen für weitere Teile der Schuhsohle, beispielsweise der Zwischensohle, die durch Einschießen einer weiteren Reaktionsmischung nach Entnahme der Platzhalter hergestellt werden.

Die Ausgangskomponenten (a) bis (f) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (f) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper aus Integralschaumstoffen eine Dichte von 100 bis 500 g/L, vorzugsweise von 150 bis 300 g/L aufweisen. Die Verdichtungsgrade zur Herstellung der erfindungsgemäßen Polyurethanintegralschaumstoffe liegen im Bereich von 1,1 bis 8,5, vorzugsweise von 2,1 bis 7,0.

Im Folgenden soll die Erfindung anhand von Beispielen erläutert werden:

Gemäß den in Tabelle 1 angegebenen Zusammensetzungen wurden Polyurethanintegralschaumstoffe mit einer Formteildichte von 250 g/L hergestellt. Dazu wurden jeweils die A-Komponente und die B-Komponente im angegebenen Mischungsverhältnis vermischt und in eine Form gegeben.

**Tabelle 1:**

| | Bsp. 1 | Bsp. 2 | Bsp. 3 | V 1 | V 2 |
|---|---|---|---|---|---|
| A-Komponente: | | | | | |
| Lupraphen H 940 (*) | 0 | 0 | 0 | 86,4 | 0 |
| Düsobuthylphthalat | 0 | 0 | 0 | 9,5 | 0 |
| Lupranol 2043 (**) | 0 | 0 | 0 | 0 | 57 |
| Lupranol 2095 (***) | 0 | 0 | 0 | 0 | 38 |
| PTH F 2000 (****) | 96,4 | 91,39 | 91,19 | 0 | 0 |
| Düsotridecylphthalat | 0 | 5 | 5 | 0 | 0 |
| Monoethylenglykol | 0,7 | 0,7 | 0,7 | 1,3 | 1,1 |
| 1,4-Butandiol | 1 | 1 | 1 | 0 | 2 |
| Lupragen N203 (+) | 0,55 | 0,56 | 0,56 | 1,3 | 0,55 |
| Dabco 1027 (++) | 0,24 | 0,24 | 0,24 | 0,6 | 0,23 |
| 1-Methylimidazol | 0 | 0 | 0,2 | 0 | 0 |
| Fomrez UL28 (+++) | 0,01 | 0,01 | 0,01 | 0 | 0,02 |
| Wasser | 1,1 | 1,1 | 1,1 | 0,9 | 1,1 |
| | | | | | |

| B-Komponente: | | | | | |
|---|---|---|---|---|---|
| 4,4'-MD | 54 | 54 | 54 | 50 | 56 |
| uretonimmin-mod MDI | 6 | 6 | 6 | 3,8 | 4 |
| Lupraphen 8108 (#) | 0 | 0 | 0 | 29,2 | 0 |
| Luraphen H 403 (##) | 0 | 0 | 0 | 10 | 0 |
| Lupranol 2043 (**) | 0 | 0 | 0 | 0 | 38 |
| Dipropylenglykol | 0 | 0 | 0 | 0 | 2 |
| PTHF 2000 (****) | 40 | 40 | 40 | 0 | 0 |
| γ-Butyrolacton | 0 | 0 | 0 | 7 | 0 |
| NCO-Gehalt (%) | 18,1 | 18,1 | 18,1 | 16,2 | 18,1 |
| | | | | | |
| Mischungsverhältnis A : B | 100:63 | 100:62 | 100:63 | 100:66 | 100:62 |

| | | | | | |
|---|---|---|---|---|---|
| (*) Polyadipate auf Monoethylenglykol- und Diethylenglykolbasis, OHZ = 56 mg KOH/g (**) Polyetherdiol auf Basis von Ethylenoxyd und Propylenoxyd, OHZ = 29 mg KOH/g (***) Polyetherpolyol mit Glycerin als Startermolekül auf Basis von Ethylenoxyd und Propylenoxyd, OHZ = 35 mg KOH/g (****) Polytetrahydrofuran 2000, OHZ = 56 mg KOH/g (+) 33% Triethylendiammin und 67% Monoethylenglykol (++) Aminkatalysator (+++) Dimethylzinndicarboxylat (#) Polyadipate auf Monoethylenglykol- und 1,4-Butandiol Basis, OHZ = 56 mg KOH/g (##) Verzweigte Polyadipate auf Basis von Monoethylenglykol, Diethylenglykol und Glyzerol, OHZ = 60 mg KOH/g | | | | | |

Die Starzeiten und Steigzeiten der Reaktionsmischungen gemäß Beispiel 1 bis 3 und Vergleichsbeispiel 1 und 2 sowie das freigeschäumte Raumgewicht der Reaktionsmischungen sind in Tabelle 2 angegeben:

**Tabelle 2:**

| | Bsp. 1 | Bsp. 2 | Bsp. 3 | V 1 | V 2 |
|---|---|---|---|---|---|
| Startzeit (sec) | 6 | 6 | 6 | 5 | 6 |
| Steigzeit (sec) | 40 | 38 | 36 | 45 | 40 |
| Freigeschäumte Dichte | 147 | 144 | 139 | 136 | 140 |

Die Eigenschaften der gemäß Tabelle 1 hergestellten Schaumstoffe nach Beispiel 1 bis 3 und den Vergleichsbeispielen 1 und 2 sind in Tabelle 3 angegeben:

**Tabelle 3:**

| | Bsp. 1 | Bsp. 2 | Bsp. 3 | V 1 | V 2 |
|---|---|---|---|---|---|
| Härte Asker C SRIS 0101 | 41 | 43 | 43 | 32 | 30 |
| Härte Shore A (DIN 53505) | 26 | 25 | 27 | 16 | 14 |
| nach 35 Tage Hydrolyse (§) | 25 | 26 | 25 | zerstört | zerstört |
| Zugfestigkeit (Nimm²) (DIN 53504) | 2,2 | 2,5 | 2,5 | 2 | 1,4 |
| nach 35 Tage Hydrolyse (§) | 2,1 | 2,4 | 2,4 | zerstört | zerstört |
| Reißdehnung (%) (DIN 53504) | 365 | 408 | 409 | 537 | 350 |
| nach 35 Tage Hydrolyse (§) | 420 | 440 | 445 | zerstört | zerstört |
| Weiterreißfestigkeit (Nimm) (DIN 53507) | 2,4 | 2,4 | 2,5 | 2,2 | 1,1 |
| Abrieb (5N-40m, mg) (DIN 53516) | 60 | 62 | 85 | 200 | >300 |
| Rückprallelastizität (%) (DIN 53512) | 48 | 48 | 48 | 33 | 35 |
| Druckverformungsrest (50°C, 50%, 6 Stunden) | 6,4 | 7 | 6 | 11,5 | 12 |

| | | | | | |
|---|---|---|---|---|---|
| (§) Hydrolyse gemäß DIN 53543 : 70 °C, 100% relative Luftfeuchtigkeit | | | | | |

## Patentansprüche

1. Verfahren zur Herstellung von weichen Schuhsohleneinlegeteilen mit einer Shore-A-Härte von maximal 40 und einer Dichte von 100 bis 500 g/L, bei dem man
a) Polyisocyanate mit
b) höhermolekularen Verbindungen mit mindestens zwei reaktiven Wasserstoffatomen, enthaltend mindestens 50 Gew.-% Polytetrahydrofuran mit einem Molekulargewicht von 500 bis 6000 g/mol,
c) Treibmitteln und gegebenenfalls
d) Kettenverlängerungsmitteln,
e) Katalysatoren und
f) sonstigen Hilfsmitteln und/oder Zusatzstoffen,
zu einer Reaktionsmischung vermischt, in eine Form gibt und zu einem Polyurethanintegralschaumstoff ausreagieren lässt.

2. Verfahren nach Anspruch 1, **dadurch gekennzeichnet, dass** die Polyisocyanate (a) zu mindestens 80 Gew.-% 4,4'-MDI und / oder Prepolymere auf Basis von 4,4'-MDI enthalten.

3. Verfahren nach Anspruch 1 oder 2, **dadurch gekennzeichnet, dass** die höhermolekularen Verbindungen mit mindestens zwei reaktiven Wasserstoffatomen (b) mindestens 80 Gew.-% Polytetrahydrofuran enthalten.

4. Verfahren nach einem der Ansprüche 1 bis 3, **dadurch gekennzeichnet, dass** die Katalysatoren 1-Methylimidazol enthalten.

5. Schuhsohleneinlageteile mit einer Shore A-Härte von maximal 40, herstellbar nach einem Verfahren gemäß einem der Ansprüche 1 bis 4.

6. Schuhsohle enthaltend ein oder mehrere weiche Schuheinlegeteile mit einer Shore-A-Härte von maximal 40 gemäß Anspruch 5.
